# EUROPÄISCHE PATENTSCHRIFT

(11) **EP 3 791 246 B1**
(45) Veröffentlichungstag und Bekanntmachung des Hinweises auf die Patenterteilung: **02.07.2025**
(21) Anmeldenummer: 19723075.8
(22) Anmeldetag: 07.05.2019
(51) Int. Cl.: G06F 3/041, G06F 3/01, B60K 35/25, B60K 35/22, B60K 35/10

(54) **BEDIENVORRICHTUNG FÜR EIN FAHRZEUG**
CONTROL DEVICE FOR A VEHICLE
DISPOSITIF DE COMMANDE D'UN VÉHICULE

(30) Priorität: 07.05.2018 DE 102018110871
(43) Veröffentlichungstag der Anmeldung: 17.03.2021
(73) Patentinhaber: BHTC GmbH, 59557 Lippstadt (DE)
(72) Erfinder: TRAPP, Ralph, 33106 Paderborn (DE); STEINKAMP, Michael, 59558 Lippstadt (DE)
(74) Vertreter: dompatent von Kreisler Selting Werner - Partnerschaft von Patent- und Rechtsanwälten mbB
(86) Internationale Anmeldenummer: PCT/EP2019/061720
(87) Internationale Veröffentlichungsnummer: WO 2019/215177

(56) Entgegenhaltungen:
- EP-A2- 3 040 826
- EP-A2- 3 229 117
- DE-A1- 102013 006 174
- DE-A1- 102013 225 463
- US-A1- 2010 277 431
- US-A1- 2014 168 153
- US-A1- 2017 293 377

## Beschreibung

Die vorliegende Patentanmeldung nimmt die Priorität der deutschen Patentanmeldung 10 2018 110 871.0 vom 7. Mai 2018 in Anspruch.

Die Erfindung betrifft eine Bedienvorrichtung für ein Fahrzeug, und zwar beispielsweise für eine Fahrzeugkomponente wie eine Klimaanlage, ein Infotainmentsystem oder ein Navigationssystem und ganz allgemein ein Mensch-Maschine-Interface (Human-Machine-Interface).

Der Einsatz von Displays im Fahrzeug, die gleichzeitig Eingabeelemente in Form von Touchoberflächen sind, erfreuen sich zunehmender Verbreitung. Bei diesen Touchdisplays, die bereits durch leichte Berührung ausgelöst werden, kommt es unter Umständen zur versehentlichen Betätigung. Wenn hierdurch sicherheitsrelevante Funktionen ausgelöst werden oder es zu anderen ungewollten Verstellungen einer Fahrzeugfunktion kommt, kann dies problematisch sein. In solchen Fällen wird eine zusätzliche Sensorik benötigt, mit der die Kraft erfassbar oder ermittelbar ist, mit der der Bediener auf den entsprechenden Bereich im Bedienfeld drückt. Auf diese Weise wird eine Auslösung durch einfaches Auflegen vermieden. Da oft die Forderung nach einer starren Bedienoberfläche besteht, kommen als Sensorik hierbei im Wesentlichen kraftsensitive Widerstände, Dehnungsmessstreifen, optische oder kapazitive Sensoren zum Einsatz. Die Sensoren messen dabei üblicherweise einen Weg, den die Bedienoberfläche gegenüber einem starren Teil des Bauteils über die Auslenkung eines Federelements zurücklegt. Hierzu wird die Displayoberfläche üblicherweise im Gehäuse beweglich gelagert.

Die oben beschriebenen Prinzipien erfordern einen komplizierten Mechanismus, der die Bewegung des Displays gegenüber einem starren Gehäuseteil ermöglicht. Zudem werden ein oder mehrere Federelemente benötigt, was das Gesamtsystem verteuert.

Aus WO-A-2017/172461 und US-A-2014/168153 ist jeweils eine Bedienvorrichtung bekannt, bei der eine lokale Verformung eines Displays bei dessen manueller Betätigung mit einer gewissen Andrückkraft optoelektrisch erfasst wird.

Aus EP-A-3 040 826 und EP-A-3 229 117 ist jeweils eine Bedienvorrichtung bekannt, bei der eine lokale Verformung eines Displays bei dessen manueller Betätigung mit einer gewissen Andrückkraft kapazitiv erfasst wird.

Aufgabe der Erfindung ist es, eine Bedienvorrichtung für ein Fahrzeug anzugeben, deren Konstruktion zur Messung der Auslösekraft bei der manuellen Betätigung des Displays vereinfacht ist.

Zur Lösung dieser Aufgabe dient erfindungsgemäß eine Bedienvorrichtung für ein Fahrzeug mit den Merkmalen des Anspruchs 1. Einzelne Aufgaben der Erfindung sind Gegenstand der Unteransprüche.

Sinngemäß wird mit der Erfindung vorgeschlagen, das Display durchbiegbar an einer Haltevorrichtung der Bedienvorrichtung anzuordnen. Aufgrund der reversiblen Durchbiegungslagerung des Displays bewegt sich dieses also bei manueller Betätigung, d.h. manueller Einwirkung auf das Display mit einer Andrücckraft. Auch bei vergleichsweise steifer aber dennoch elastischer Lagerung des Displays kommt es bei Ausübung einer Andrückkraft auf die Display-Bedienoberfläche zu einer "Durchbiegung", d.h. einer lokalen Veränderung des Abstands des Displays oder eines Bestandteils des Displays gegenüber einer Referenzebene oder einem Referenzpunkt. Je größer der Weg ist, den das Display in Folge seiner elastischen Anbindung an die Haltevorrichtung zurücklegt, desto größer ist also die Andrückkraft, die auf das Display einwirkt. Wird ein Mindestweg bei einer Durchbiegung des Displays erkannt, so kann auf eine valide, d.h. beabsichtigte Betätigung des Displays zwecks Eingabe eines Befehls entschieden werden. Die Ermittlung der Größe der Andrückkraft durch Abstandsmessung, wie nach der Erfindung vorgesehen, ist wesentlich weniger aufwändig als die Ermittlung der Durchbiegung des Displays gemäß Stand der Technik durch optoelektrische Sensoriken.

Vorteilhafterweise ist das Display neben einer Anzeigeeinheit mit einer Abdeckscheibe versehen, mit der die Anzeigeeinheit fest verbunden ist und die zumindest in den Bereichen der Stützelemente seitlich über die Anzeigeeinheit übersteht, wobei die Abdeckscheibe in diesen Überstandsbereichen auf den Stützelementen aufliegt und dort fixiert ist (z.B. durch Verkleben). Durch die Dicke der Abdeckscheibe, deren Material und die Länge sowie Breite der Überstandsbereiche kann die Steifigkeit, mit der das Display elastisch an der Haltevorrichtung gelagert ist, bestimmt werden. Die Abdeckscheibe, die im Regelfall dem mechanischen Schutz der Anzeigeeinheit des Displays dient, erfährt also bei einer Kraftausübung auf das Display bei manueller Betätigung desselben eine Durchbiegung, die, wie oben beschrieben, durch den Betätigungssensor beispielsweise als vom Display aufgrund der Durchbiegung zurückgelegter Weg erfasst wird. Die Abdeckscheibe überragt die Anzeigeeinheit zumindest in denjenigen Bereichen seitlich, in denen das Display sich auf den Stützelementen abstützt. Die abstützenden Stützelemente können die Randabschnitte eines Rahmens der Haltevorrichtung bilden, die das Display allseitig umgibt. Dann wäre die Abdeckscheibe an ihrem gesamten umlaufenden Rand auf der Haltevorrichtung bzw. deren Stützelementen aufliegend und dort fixiert angeordnet (z.B. durch Verkleben). Es ist aber auch denkbar, dass die Abdeckscheibe lediglich an zwei insbesondere gegenüberliegenden Rändern der Anzeigeeinheit des Displays über die Anzeigeeinheit übersteht und an der Haltevorrichtung gelagert ist.

Bei dem Betätigungssensor handelt es sich zweckmäßigerweise um einen Weg- oder Kraftsensor. Mit Hilfe eines Wegsensors ist es möglich, auf die Kraft zu schließen, mit der bei manueller Betätigung des Displays auf dieses eingewirkt wird. Bei Kenntnis der Steifigkeit, d.h. der Federelastizität, mit der das Display an der Haltevorrichtung angebunden ist, kann dann über die Länge des Wegs, um den das Display versetzt wird, auf die Kraft geschlossen werden. Der Einsatz eines oder mehrerer Dehnungsstreifen oder kraftsensitiven Widerstandes ist erfindungsgemäß ebenfalls möglich.

Als Betätigungssensor eignen sich insbesondere optisch, kapazitiv, induktiv und/oder resistiv arbeitende Sensoren. Vorzugsweise ist der Betätigungssensor als ein mikroelektromechanisches oder mikrooptoelektromechanisches Element (MEMS, MOEMS) ausgeführt.

Mit anderen Worten ist also Gegenstand der Erfindung ein System, das die Durchbiegung der Displaybaugruppe, die durch einen Fingerdruck ausgelöst wird, an einem oder mehreren Punkten misst. Hierzu werden ein oder mehrere Sensoren z.B. auf einem Bauteilträger angebracht, die die Durchbiegung der Displaybaugruppe an mehreren Stellen messen. Über die Steifigkeit der Displaybaugruppe kann so auf die auf der Displayoberfläche einwirkende Kraft geschlossen werden, und zwar für eine vorgebbare Anzahl von lokalen Bereichen des Displays (z.B. für die Bedienfelder des Displays), so dass im Vorhinein für eine nahezu beliebige Anzahl von Positionen auf dem Display das jeweilige "Wegmuster" aus den einzelnen, den Sensoren zugeordneten Mindestverschiebewegen der Displaybaugruppe festgelegt werden kann, das bei einer späteren manuellen Betätigung des Displays gegeben sein muss, damit die Betätigung als valide Bedienung erkannt wird.

Die Displaybaugruppe besteht hierbei aus einem Deckglas, das das eigentliche Display schützt und das mit einem Gehäuse verbunden ist. Üblicherweise geschieht dies durch eine Verklebung. Auf der Rückseite des Deckglases ist das Display mithilfe einer optisch transparenten Klebung (sogenanntes Optical Bonding) angebracht. Dieses Display besteht üblicherweise aus Elementen einer Flüssigkristallschicht und dem Backlight (Hinterleuchtungseinheit).

Wird bei dieser Anordnung Druck auf das Deckglas ausgeübt, so verformt sich dieses leicht. Diese Verformung überträgt sich zu einem gewissen Maß auf die restlichen Komponenten. Somit ergibt sich relativ zum Gehäuse, eine Verschiebung, die über die Sensoren gemessen werden kann. Diese Verformung hängt stark davon ab, wo die Kraft in das Deckglas eingeleitet wird und wie stark diese Kraft ist. Die Position der Krafteinleitung wird über den Touchsensor, der Bestandteil des Displays ist oder als eine separate Sensorschicht zwischen Display und Deckglas angebracht ist, ermittelt. Über die Kenntnis der Displayverformung bei unterschiedlichen Kräften und Positionen kann über einen oder mehrere Wegmesssensoren auf die Kraft geschlossen werden. Da die Displaykomponenten und das Deckglas eine gewisse Steifigkeit aufweisen, ist die Verformung sehr gering und wird vom Benutzer nicht wahrgenommen. Die Sensoren müssen daher eine hohe Empfindlichkeit aufweisen. Je nach Anzahl der Kraftsensoren können auch mehrere Krafteinleitungen über mehrere Finger gemessen werden.

Bei der Erfindung wird davon ausgegangen, dass die Hinterleuchtungseinheit des Displays fest und unbeweglich in der Haltevorrichtung angeordnet ist. Dies hat den Vorteil, dass die elastisch angebundene Masse reduziert ist und nun noch im Wesentlichen aus den Massen des Displays selbst, also der Anzeigevorrichtung, dem Touchpanel und dem Abdeckglas besteht.

Die Hinterleuchtungseinheit (auch Backlight genannt) kann durch optisches Bonden an das Display angebunden sein. Statt eines optischen Bondens ist die Hinterleuchtungseinheit aber im Regelfall durch ein umlaufendes elastisches Abdichtungsband mit dem Display bzw. der Rückseite des Displays verbunden. Durch dieses umlaufende Abdichtungsband wird der Zwischenraum zwischen der Lichtaustrittsseite der Hinterleuchtungseinheit und der Rückseite des Displays nach außen hin zur Verhinderung von austretendem Hinterleuchtungslicht abgedichtet.

Wird nun die Hinterleuchtungseinheit feststehend in der Haltevorrichtung angeordnet, so ermöglicht es das elastische Abdichtungsband, dass sich das Display weiterhin durchbiegt, wenn mechanisch Druck auf das Display ausgeübt wird, wie dies bei einer manuellen Betätigung des Displays der Fall ist. Dabei ist nach der Erfindung vorgesehen, dass der Betätigungssensor eine Abstandsveränderung zwischen Display und Hinterleuchtungseinheit erfasst. Hierbei ist es möglich, dass der Betätigungssensor integraler Bestandteil des Abdichtungsbandes ist und somit anhand einer Komprimierung des Abdichtungsbandes, die an mehreren Stellen des Abdichtungsbandverlaufs erfasst wird, auf eine Durchbiegung des Displays geschlossen wird. Auch hier gilt wiederum, dass das Kompressionsmuster, dem das Abdichtungsband bei einer Betätigung des Displays ausgesetzt ist, Aufschluss darüber gibt, wo auf der Displayoberfläche mit welcher Kraft gedrückt worden ist.

In weiterer vorteilhafter Ausgestaltung der Erfindung kann vorgesehen sein, dass die Bedienvorrichtung mit einem haptischen Feedback versehen ist. Es steigert den Bedienkomfort, wenn dem Anwender die Erkennung einer validen Bedienung des Bedienfelds signalisiert wird. Dies erfolgt vor allem vorteilhafterweise durch eine taktile Rückmeldung. Ein derartiges haptisches Feedback lässt sich beispielsweise mechanisch, elektromechanisch oder aber auch elektrisch realisieren. Nach der Erfindung ist das Display elastisch mit der Haltevorrichtung verbunden. Ein mechanisches taktiles Feedback lässt sich damit dadurch realisieren, dass das Display mittels eines Aktuators in Richtung der elastischen Anbindung mechanisch angeregt wird. Dies kann beispielsweise dadurch erfolgen, dass das Display mittels des Aktuators impulsartig in Richtung Bodenseite der Haltevorrichtung und/oder in Gegenrichtung bewegt wird. Eine weitere Möglichkeit der Realisierung eines haptischen Feedbacks besteht darin, dass in das Display bzw. in das Abdeckglas des Displays Biegewellen eingeprägt werden. Eine weitere Möglichkeit der Realisierung des haptischen Feedbacks besteht in einer rein elektrisch arbeitenden Variante mittels örtlich erzeugter elektrischer Felder.

Nachfolgend wird anhand der Zeichnung ein Ausführungsbeispiel der Erfindung näher erläutert. Im Einzelnen zeigen dabei:
- Fig. 1: eine Darstellung eines elastisch aufgehängten Displays einer Bedienvorrichtung gemäß einem nicht erfindungsgemäßen Ausführungsbeispiel in Ruhestellung,
- Fig. 2: das Display nach Fig. 1 im Zustand seiner Durchbiegung bei Betätigung des Displays, wobei der Grad der Durchbiegung zur Verdeutlichung des Funktionsprinzips der Erfindung stark übertrieben gezeigt ist,
- Fig. 3: eine Darstellung eines erfindungsgemäß elastisch aufgehängten Displays einer Bedienvorrichtung gemäß einem erfindungsgemäßen zweiten Ausführungsbeispiel in Ruhestellung und
- Fig. 4: das Display nach Fig. 3 im Zustand seiner Durchbiegung bei Betätigung des Displays, wobei der Grad der Durchbiegung zur Verdeutlichung des Funktionsprinzips der Erfindung stark übertrieben gezeigt ist,

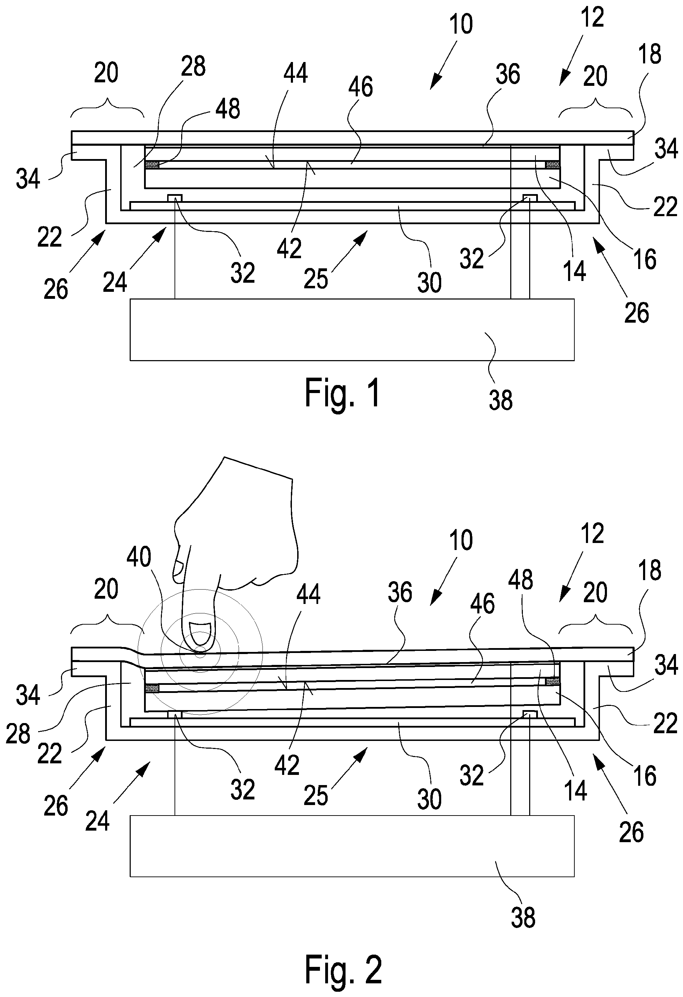

Fig. 1 zeigt schematisch ein nicht erfindungsgemäßes erstes Ausführungsbeispiel einer Bedienvorrichtung 10 für ein Fahrzeug (beispielsweise in der Verwendung als zentrale Eingabevorrichtung, die in der Mittelkonsole oder in der Instrumententafel angeordnet ist). Die Bedienvorrichtung 10 weist ein Display 12 auf, das eine beispielsweise in LCD-Technologie ausgeführten Anzeigeeinheit 14 und eine Hinterleuchtungseinheit 16 aufweist. Ferner umfasst das Display 12 eine Abdeckscheibe 18, die, wie in Fig. 1 gezeigt, die Anzeigeeinheit 14 an mindestens zwei gegenüberliegenden Rändern oder Enden überragt. In diesen Überstandsbereichen 20 liegt die Abdeckscheibe 18 auf Stützelementen 22 einer Haltevorrichtung 24 auf, die in diesem Ausführungsbeispiel mit einer Bodenwand als Bodenseite 25 versehen ist, von der die Stützelemente 22 an mindestens zwei gegenüberliegenden Randabschnitten 26 aufragen.

Durch die zuvor beschriebene Konstruktion überspannt also das Display den durch die Stützelemente 22 definierten Freiraum 28 der Haltevorrichtung 24.

Die Haltevorrichtung 24 benötigt nicht zwingend eine durchgehende Bodenwand; die Bodenseite 25 kann auch als Öffnung und damit als offene Bodenseite der Haltevorrichtung 24 ausgeführt sein.

In jedem Fall befindet sich unterhalb des Displays 12 beispielsweise auf einer Platine o.dgl. Trägerplatte 30 eine Weg- bzw. Kraftsensorik in Form vorzugsweise mehrerer Betätigungssensoren 32, die insbesondere optisch, kapazitiv, induktiv, und/oder resistiv arbeiten.

Die Abdeckscheibe 18 ist an beispielsweise Flanschen 34 der Stützelemente 22 befestigt (z.B. durch Verklebung). Die Anzeigeeinheit 14 ist zweckmäßigerweise durch einen transparenten Kleber (sogenanntes Optical Bonding) mit der Unterseite der Abdeckscheibe 18 fest verbunden. Das Display 12 verfügt ferner über eine Touchsensorik 36 (z.B. Touchpanel).

Wird nun, wie in Fig. 2 angedeutet, Druck auf die Abdeckscheibe 18 ausgeübt, wie dies bei einer manuellen Betätigung des Displays 12 der Fall ist, so erfahren die Überstandsbereiche 20 der Abdeckscheibe 18 in ihren Bereichen zwischen den Stützelementen 22 und der Anzeigeeinheit 14 eine Durchbiegung. Infolgedessen bewegt sich das Display 12 in Richtung Bodenseite 25 der Haltevorrichtung 24, so dass die manuelle Betätigung des Displays 12 anhand einer Abstandsveränderung (d.h. in diesem Fall anhand einer Abstandsverringerung) erkannt wird. Diese Abstandsveränderung ist an den mehreren Stellen, an denen sie von den mehreren Betätigungssensoren 32 erfasst wird, unterschiedlich, und zwar in Abhängigkeit von der manuell aufgebrachten Andrückkraft und dem Ort auf der Abdeckscheibe 18, d.h. auf dem Display 12, an dem sie ausgeübt wird.

Die Touchsensorik 36 und die Betätigungssensoren 32 liefern ihre Daten an eine Auswerteeinheit 38, in der nun bewertet werden kann, ob auf das Display 12 an der durch die Touchsensorik 36 lokalisierten Betätigungsstelle (siehe in Fig. 2 bei 40) manuell diejenige Kraft ausgeübt wird, die für eine gültige, d.h. beabsichtigte Betätigung des Displays 12 erforderlich ist. Denn diese Kraft ist dann erreicht, wenn die Betätigungssensoren 32 entsprechende Bewegungen an den ihnen zugeordneten "Messpunkten" des Displays 12 erkennen.

Bei dem zuvor beschriebenen Ausführungsbeispiel "hängt" die Hinterleuchtungseinheit 16 unter der Anzeigeeinheit 14, d.h. an der Rückseite 42 des Displays 12. Die Hinterleuchtungseinheit 16 weist eine der Rückseite 42 zugewandte Lichtaustrittsseite 44 auf. Zwischen der Lichtaustrittsseite 44 und der Rückseite 42 existiert im Regelfall ein Zwischenraum 46, der nach außen hin durch ein elastisches Abdichtungsband 48 optisch abgedichtet ist. Dadurch kann Hinterleuchtungslicht der Hinterleuchtungseinheit 16 seitlich aus dem Zwischenraum 46 nicht austreten.

Diese über das Abdichtungsband 48 insoweit elastische Anbindung der Hinterleuchtungseinheit 16 an das Display 12 kann, wenn die Hinterleuchtungseinheit 16 unter dem Display 12 hängt, ohne sich an der Haltevorrichtung 24 abzustützen, auf Grund von von außen einwirkenden Vibrationen in ungewollte Bewegungen geraten.

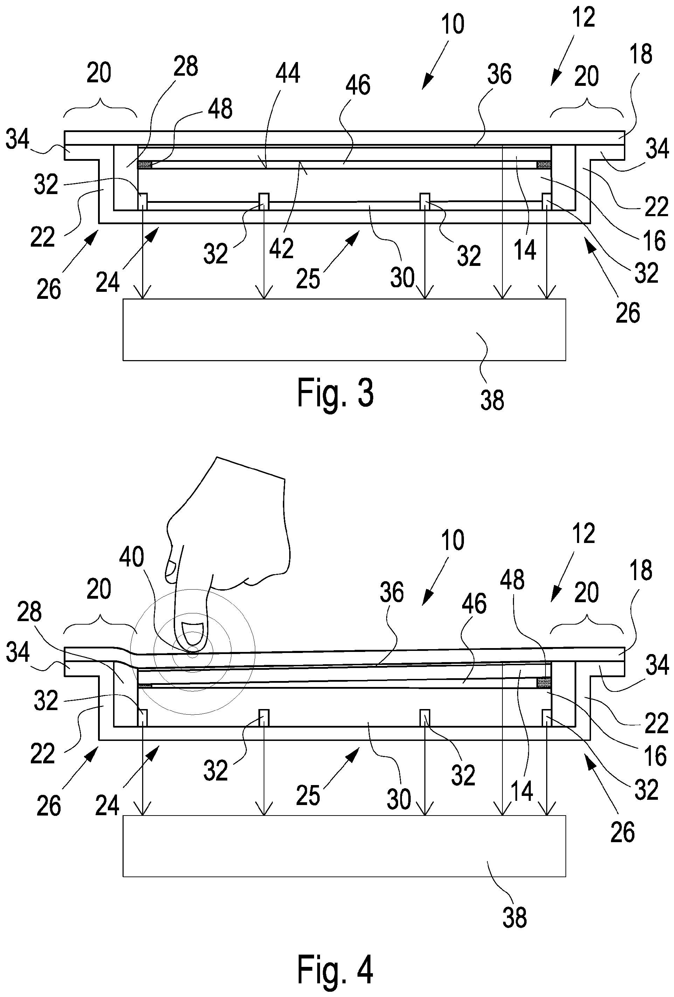

Bei einem zweiten erfindungsgemäßen Ausführungsbeispiel, das in den Fign. 3 und 4 gezeigt ist, ist daher die Bedienvorrichtung 10' hinsichtlich der Anordnung und Lagerung der Hinterleuchtungseinheit 16 geändert. Soweit die Elemente der Bedienvorrichtung 10' konstruktions- bzw. funktionsgleich zu den Elementen der Bedienvorrichtung 10 der Fign. 1 und 2 sind, sind sie in den Fign. 3 und 4 mit den gleichen Bezugszeichen versehen wie im Falle der Bedienvorrichtung 10.

Bei dem Ausführungsbeispiel der Bedienvorrichtung 10' gemäß den Fign. 3 und 4 ist nun die Hinterleuchtungseinheit 16 an der Bodenseite 25 der Haltevorrichtung 24 gelagert und damit im Wesentlichen unbeweglich. Wird nun beispielsweise an der Stelle 40 Kraft auf das Display 12 ausgeübt, so verschiebt sich das Display 12 unter Komprimierung des Abdichtungsbandes 48. Die dabei erfolgende Verschiebung bzw. der dabei erfolgende Versatz des Displays 12 gegenüber der Lichtaustrittsseite 44 der Hinterleuchtungseinheit 16 wird erfasst. Die Betätigungssensorik ist in das Abdichtungsband 48 integriert. Dies kann durch beispielsweise resistive Erfassung einer Komprimierung (gegebenenfalls örtlich) des Abdichtungsbandes 48 erfolgen. Das Abdichtungsband 48 kann aber auch mit mehreren Messpunkten versehen sein. Anstelle resistiv arbeitender Sensoren kann hier auch mit kapazitiven Sensoren (das Abdichtungsband 48 wirkt dabei z.B. als Dielektrikum, das sich bei der Komprimierung verändert) oder induktiv arbeitenden Sensoren gearbeitet werden.

Das erfindungsgemäße Konzept arbeitet ohne aufwendige Federmechanismen. Die elastische und dennoch starre Anbindung erfolgt einzig und allein auf einfache Art und Weise durch die "Aufhängung" des Displays 12 mittels der Abdeckscheibe 18, die den Freiraum 28 der Haltevorrichtung 24 überspannt und damit in den seitlich über die Anzeigeeinheit 14 übersehende Überstandsbereichen Durchbiegungen erfährt, wenn Kraft auf das Display 12 ausgeübt wird. Die damit verbundene Durchbiegung kann erkannt werden und daraus auf die aufgewendete Kraft rückgeschlossen werden. Ist die Mindestandrückkraft erreicht bzw. überschritten, so liegt eine gewollte Betätigung des Displays vor.

### BEZUGSZEICHENLISTE

- 10: Bedienvorrichtung
- 12: Display
- 14: Anzeigeeinheit des Displays
- 16: Hinterleuchtungseinheit
- 18: Abdeckscheibe des Displays
- 20: Überstandsbereiche der Abdeckscheibe
- 22: Stützelemente der Haltevorrichtung
- 24: Haltevorrichtung
- 25: Bodenseite der Haltevorrichtung
- 26: Randabschnitte der Bodenseite
- 28: Freiraum in der Haltevorrichtung
- 30: Trägerplatte
- 32: Betätigungssensor
- 34: Flansche der Stützelemente
- 36: Touchsensorik des Displays
- 38: Auswerteeinheit
- 40: Druckausübungsstelle auf dem Display
- 42: Rückseite des Displays
- 44: Lichtaustrittsseite der Hinterleuchtungseinheit
- 46: Zwischenraum zwischen Display und Hinterleuchtungseinheit
- 48: Abdichtungsband

## Patentansprüche

1. Bedienvorrichtung (10) für ein Fahrzeug, mit
- einem Display (12) mit Touchsensorik (36) zur zwecks Eingabe eines Befehls erfolgenden manuellen Betätigung des Displays (12) mit einer vorgebbaren Mindestandrückkraft,
- einer Haltevorrichtung (24), von der das Display (12) gehalten ist,
- wobei die Haltevorrichtung (24) eine Randabschnitte aufweisende Bodenseite (25) und Stützelemente (22) aufweist, die von mindestens gegenüberliegenden Randabschnitten (26) der Bodenseite aufragen und einen Freiraum zwischen sich definieren, und
- wobei das Display (12) allein von den Stützelementen (22) der Haltevorrichtung (24) gehalten ist und den Freiraum (28) unter Beibehaltung eines Abstands zur Bodenseite (25) der Haltevorrichtung (24) überbrückt,
- mindestens einem Betätigungssensor (32) zur Erfassung einer Durchbiegung des Displays (12) bei dessen manueller Betätigung,
- wobei der mindestens eine Betätigungssensor (32) eine Veränderung eines Abstands des Displays (12) zu einer Referenzebene oder eine Veränderung eines Abstands eines Teils des Displays (12) zu einer Referenzebene erfasst, wobei die Veränderung des Abstands auf Grund einer Durchbiegung des Displays bei dessen mit der vorgebbaren Mindestandrückkraft erfolgender manueller Betätigung erfolgt, und
- einer mit der Touchsensorik (36) und dem mindestens einen Betätigungssensor (32) verbundenen Auswerteeinheit (38) zur Auswertung der Signale der Touchsensorik (36) und des mindestens einen Betätigungssensors (32) zwecks Entscheidung, ob bei manueller Betätigung des Displays (12) auf dieses mit zumindest der Mindestandrückkraft eingewirkt wird,
- einer eine Lichtaustrittsseite (44) aufweisende Hinterleuchtungseinheit (16), die auf der Bodenseite (25) der Haltevorrichtung (24) angeordnet und mit ihrer Lichtaustrittsseite (44) der Rückseite (42) des Displays (12) zugewandt ist,
- wobei ein Zwischenraum (46) zwischen der Lichtaustrittsseite (44) der Hinterleuchtungseinheit (16) und der Rückseite (42) des Displays (12) existiert, der nach außen durch ein elastisches Abdichtungsband (48) zur Verhinderung des Austritts von Hinterleuchtungslicht abgedichtet ist,
- wobei der Betätigungssensor (32) eine Veränderung des Abstands der Rückseite (42) des Displays (12) zur Lichtaustrittsseite (44) der Hinterleuchtungseinheit (16) erfasst und
- wobei der Betätigungssensor als Teil des Abdichtungsbandes ausgebildet ist und anhand von dessen Komprimierung bei einer manuellen Betätigung des Displays eine Abstandsveränderung zwischen der Rückseite (42) des Displays (12) und der Lichtaustrittsseite (44) der Hinterleuchtungseinheit (16) erfasst.

2. Bedienvorrichtung (10) nach Anspruch 1, wobei das Display (12) eine Anzeigeeinheit (14) und eine Abdeckscheibe (18) aufweist, mit der die Anzeigeeinheit (14) fest verbunden ist und die zumindest in den Bereichen der Stützelemente (22) seitlich über die Anzeigeeinheit (14) übersteht, und dass die Abdeckscheibe (18) in diesen Überstandsbereichen (20) auf den Stützelementen (22) aufliegt.

3. Bedienvorrichtung (10) nach Anspruch 1 oder 2, wobei der Betätigungssensor (32) ein Weg- oder Kraftsensor ist und/oder optisch, kapazitiv, induktiv und/oder resistiv arbeitet und/oder als ein mikroelektromechanisches oder mikrooptoelektromechanisches Element ausgeführt ist.

4. Bedienvorrichtung nach einem der Ansprüche 1 bis 3, mit einer durch eine elektrisch oder elektromechanisch oder elektromagnetisch arbeitende Rückmeldeeinheit zur taktilen Rückmeldung einer validen manuellen Betätigung des Displays (12).

## Claims

1. An operating device (10) for a vehicle, comprising
- a display (12) with a touch sensor system (36) for a manual actuation of the display (12) with a predeterminable minimum pressing force, for inputting a command,
- a retaining device (24) which retains the display (12),
- the retaining device (24) comprising a bottom side (25) with edge portions and support elements (22) protruding from at least opposite edge portions (26) of the bottom side and define a free space between them, and
- the display (12) being retained only by the support elements (22) of the retaining device (24) and bridging the free space (28) while maintaining a distance from the bottom side (25) of the retaining device (24),
- at least one actuation sensor (32) for sensing a bending of the display (12) upon manual actuation thereof,
- the at least one actuation sensor (32) sensing a change in a distance of the display (12) from a reference plane or a change in a distance of a part of the display (12) from a reference plane, the change in distance being due to a bending of the display upon manual actuation thereof with the predeterminable minimum pressing force, and
- an evaluation unit (38) connected to the touch sensor system (36) and the at least one actuation sensor (32), for the evaluation of the signals of the touch sensor system (36) and the at least one actuation sensor (32) for the purpose of deciding, whether, upon a manual actuation of the display (12), the force acting on the display is at least the minimum pressing force,
- a backlight unit (16) comprising a light emitting side (44), which unit is arranged on the bottom side (25) of the retaining device (24) and faces the rear side (42) of the display (12) by its light emitting side (44),
- a space (46) existing between the light emitting side (44) of the light emitting unit (16) and the rear side (42) of the display (12), which space is sealed to the outside by an elastic sealing strip (48) to prevent backlight leakage,
- the actuation sensor (32) sensing a change in the distance of the rear side (42) of the display (12) from the light emitting side (44) of the backlight unit (16), and
- the actuation sensor being formed as a part of the sealing strip and sensing a change in the distance between the rear side (42) of the display (32) and the light emitting side (44) of the backlight unit (16), based on the compression of the strip upon a manual actuation of the display.

2. The operating device (10) of claim 1, wherein the display (12) comprises a display unit (14) and a cover plate (18) with which the display unit (14) is fixedly connected and which protrudes laterally beyond the display unit (14) at least in the regions of the support elements (22), and wherein the cover plate (18) rests on the support elements (22) in these protrusion regions (20).

3. The operating device (10) of claims 1 or 2, wherein the actuation sensor (32) is a path or force sensor and/or operates optically, capacitively, inductively and/or resistively and/or is configured as a micro-electromechanical or micro-optoelectromechanical element.

4. The operating device (10) of one of claims 1 to 3, comprising an electric or electromechanics or electromagnetic feedback unit for a tactile feedback of a valid manual actuation of the display (12).

## Revendications

1. Dispositif de manipulation (10) pour un véhicule, comportant
- un écran (12) comportant un système de capteurs tactiles (36) pour l'actionnement manuel de l'écran (12), effectué en vue de l'entrée d'un ordre, avec une force de pression minimale pouvant être prédéfinie,
- un dispositif de maintien (24) au moyen duquel l'écran (12) est maintenu,
- dans lequel le dispositif de maintien (24) présente une face inférieure (25) présentant des sections de bord et des éléments de support (22) qui font saillie à partir d'au moins des sections de bord opposées (26) de la face inférieure et définissent un espace libre entre eux, et
- dans lequel l'écran (12) est maintenu uniquement au moyen des éléments de support (22) du dispositif de maintien (24) et couvrent l'espace libre (28) en conservant une distance par rapport à la face inférieure (25) du dispositif de maintien (24),
- au moins un capteur d'actionnement (32) permettant de détecter une flexion de l'écran (12) lors de son actionnement manuel,
- dans lequel l'au moins un capteur d'actionnement (32) détecte une modification d'une distance entre l'écran (12) et un plan de référence ou une modification d'une distance entre une partie de l'écran (12) et un plan de référence, dans lequel la modification de la distance est effectuée en raison d'une flexion de l'écran lors de son actionnement manuel effectué avec la force de pression minimale pouvant être prédéfinie, et
- une unité d'évaluation (38) connectée au système de capteurs tactiles (36) et à l'au moins un capteur d'actionnement (32) et permettant d'évaluer les signaux du système de capteurs tactiles (36) et de l'au moins un capteur d'actionnement (32) en vue de décider si, lors de l'actionnement manuel de l'écran (12), on agit sur celui-ci avec au moins la force de pression minimale,
- une unité de rétroéclairage (16) présentant une face de sortie de lumière (44) et disposée sur la face inférieure (25) du dispositif de maintien (24) et dont la face de sortie de lumière (44) est tournée vers la face arrière (42) de l'écran (12),
- dans lequel un espace intermédiaire (46) existe entre la face de sortie de lumière (44) de l'unité de rétroéclairage (16) et la face arrière (42) de l'écran (12), lequel espace intermédiaire est rendu étanche vers l'extérieur par une bande d'étanchéité élastique (48) pour empêcher la sortie de la lumière de rétroéclairage,
- dans lequel le capteur d'actionnement (32) détecte une modification de la distance entre la face arrière (42) de l'écran (12) et la face de sortie de lumière (44) de l'unité de rétroéclairage (16) et
- dans lequel le capteur d'actionnement est conçu comme une partie de la bande d'étanchéité et détecte, à l'aide de la compression de celle-ci lors d'un actionnement manuel de l'écran, une modification de la distance entre la face arrière (42) de l'écran (12) et la face de sortie de lumière (44) de l'unité de rétroéclairage (16).

2. Dispositif de manipulation (10) selon la revendication 1, dans lequel
l'écran (12) présente une unité d'affichage (14) et une vitre de recouvrement (18) à laquelle l'unité d'affichage (14) est reliée fixement et qui dépasse latéralement de l'unité d'affichage (14) au moins dans les zones des éléments de support (22), et en ce que la vitre de recouvrement (18) repose sur les éléments de support (22) dans lesdites zones de dépassement (20).

3. Dispositif de manipulation (10) selon la revendication 1 ou 2, dans lequel
le capteur d'actionnement (32) est un capteur de déplacement ou de force et/ou fonctionne de manière optique, capacitive, inductive et/ou résistive et/ou est conçu en tant qu'élément micro-électromécanique ou micro-optoélectromécanique.

4. Dispositif de manipulation selon l'une des revendications 1 à 3, comportant une unité de rétroaction fonctionnant de manière électrique ou électromécanique ou électromagnétique pour la rétroaction tactile d'un actionnement manuel valide de l'écran (12).
